# EUROPEAN PATENT APPLICATION

(11) **EP 2 237 462 A1**
(43) Date of publication of application: **06.10.2010**
(21) Application number: 09250963.7
(22) Date of filing: 31.03.2009
(51) Int. Cl.: H04L 1/00, H04L 12/24, H04Q 11/04

(54) **A method for dynamic line management DLM of digital subscriber line DSL connections**

(71) Applicant: BRITISH TELECOMMUNICATIONS public limited company, London EC1A 7AJ (GB)
(72) Inventor: The designation of the inventor has not yet been filed
(74) Representative: Geffen, Nigel Paul

(57) **Abstract**

A Digital Subscriber Line Access Multiplexor (DSLAM) 20 for operation within an access network includes a plurality of digital subscriber line modems for terminating a plurality of corresponding digital subscriber lines 19 and aggregating them for onward connection through the access network. The DSLAM 20 is operable, for each data connection to monitor the actual Signal to Noise Ratio (SNR) present on the line and compare it to the target SNR defined in a DSL profile applied to the line. If the actual SNR is higher than a threshold and the line is not active, the DSLAM forces a resynchronisation of the line.

## Description

### Field of the Invention

The present invention relates to the dynamic management of Digital Subscriber Line (DSL) connections, which is often referred to as Dynamic Line Management (DLM).

### Background to the Invention

DSL connections enable large bandwidth connections to be established over legacy twisted copper pair connections originally designed to carry simple voice calls only. The techniques employed to achieve this are sophisticated and ensuring that the correct settings are used in the DSL modems at either end of the connection in order to achieve an optimum balance between throughput characteristics (e.g. bandwidth, delay, jitter, etc.) and reliability characteristics (e.g. number of errors or errored seconds, number of re-synchronisations, etc.) in a large access network is non-trivial.

Dynamic Line Management (DLM) systems attempt to monitor the behaviour of lines and control their operation in order to improve the performance of the lines. The control is generally exerted by a central management device processing data resulting from the monitoring of the lines and based on that processing selecting a profile for use by the network side DSL modem (e.g. located in a Digital Subscriber Line Access Multiplexor (DSLAM), a Multi Services Access Node (MSAN) or other similar aggregation device) for use with that line.

The DSL modems themselves collect a large amount of data about the performance of the connection and this information can be useful to the centralized management function in deciding what profile should be selected for use by the network-side DSL modem (note the profile specifies values for particular parameters required by the DSL modem in order to set up the connection, such as a target signal to noise margin value and a level of interleave value, which parameters are discussed in greater detail below).

However, because an access network is likely to contain a large number of DSLAMs (or MSAN's etc.) they have generally been designed to operate as autonomously as possible. As such, although they will generally store some useful data about each digital subscriber line (hereinafter referred to simply as a "line") to which it is connected such as the theoretical maximum rate at which the line could have been connected last time an ADSL connection was set up over the line, each DSLAM traditionally operates according to a server client model where each DSLAM operates as a server and only reacts to requests issued to it from a client. Thus in order to obtain some of the useful information stored on the DSLAM's it has been necessary generally to request the desired information and so the traditional model was to request this information periodically. This resulted in time critical information not being found out about and acted upon as quickly as might otherwise have been the case.

WO 2007/012867 describes an improvement to this situation in which DSLAM's operate proactively to transmit certain time critical pieces of information about a DSL as soon as it has synchronised in order for such time critical data to be notified to a management device as soon as possible so that, if necessary, appropriate action may be taken as soon as possible.

However, each DSLAM/MSAN, etc. actually stores a large amount of useful data such as the bit loading per sub-carrier as well as the Signal to Noise Ratio (SNR) per sub-carrier which is also available as soon as the connection has been established.

The term Digital Subscriber Line Access Multiplexer (DSLAM) is a well known term in the art and the term is used throughout this specification to refer to such devices, but is also intended to include any device housing one or more units (e.g. ATU-C's) which terminate (at the network end of a twisted copper pair line) an xDSL connection (xDSL refers to any of the standards for transmitting much more than 64 kb of data over a copper line, by using frequencies greater than those required for transmitting analogue voice signals, such standards including ADSL SDSL, HDSL and VDSL - further including any further similar standards not yet developed), since subsequent devices might not be known as DSLAMs even though they perform a similar function (i.e. of terminating a number of digital subscriber lines and aggregating them into a higher bandwidth transmission medium of an access network). By comparison with the Technical Report of the DSL Forum TR-059, the term DSLAM as we intend it to be used is more closely aligned to the term "Access Node" used in that document. The term "Access Device or Subsystem" is also intended to be understood in this way.

Preferably two main parameters which control the operation of xDSL connections are varied to generate different profiles, the target Signal-to-Noise Ratio (SNR) margin and the interleave depth (e.g. switching between fast mode (no interleave) and interleave mode (an interleave depth of one).

The SNR margin represents the amount of redundancy built into the selected number of bits (out of a maximum of 15 bits per sub-carrier per symbol) assigned to each sub-carrier (for a given set of values for the other connection options such as amount of Forward Error Correction (FEC), Trellis coding, etc.) for each sub-carrier of the connection, given the measured value of the actual SNR experienced by the modem for that respective sub-carrier. Thus, each possible set of significant values for the connection parameters (i.e. number of bits allocated to the sub-carrier, level of trellis coding, level of interleave, etc.) has a corresponding baseline SNR which represents the minimum value of the SNR for that sub-carrier at which the sub-carrier would be expected to operate with a Bit Error Rate (BER) of 10⁻⁷ (i.e. 1 bit is expected to be in error for every 10⁷ bits); this BER of 10⁻⁷ is called the target bit error rate as the connection is expected to operate very well with this level of BER. The SNR margin represents the amount (in decibels) by which the actual measured SNR exceeds this baseline amount. Each profile specifies a target SNR margin which specifies the minimum size of the margin which each sub-carrier should be set up at, at the time of setting up the connection such that the actual received SNR may vary over time, after setting up the connection, below the measured amount at setting up the connection by up to the amount of the target margin and still the connection would be expected to operate with a BER of less than or equal to the target amount (i.e. at least as good as the target BER).

The definition of SNR margin which is given in the xDSL standard ITU G992.1 Section 9.5.1 is: "Signal-to-Noise Ratio (SNR) margin: The signal-to-noise ratio margin represents the amount of increased received noise (in dB) relative to the noise power that the system is designed to tolerate and still meet the target BER of 10-7, accounting for all coding (e.g. trellis coding, RS FEC) gains included in the design. The SNR margin ranges from -64.0 dB to +63.5 dB with 0.5 dB steps. "

It will thus be appreciated, that the lower the SNR Margin, the higher the headline bit rate that will be achievable (i.e. assuming that there are no errors). Whilst, the higher the SNR Margin, the more likely that the connection will operate in a stable manner, even in a fluctuating noise environment.

Fast/interleave mode switches the depth of interleave between no interleave (FAST mode) and any of the depths of interleave defined in the currently applicable ADSL standards (e.g. the ITU G.992.x standards). In many implementations, only the lowest level of interleave (a depth of 2, where units in a single code word which are adjacent before interleaving are separated by one interleaved unit from another word after interleaving) is used at the moment; however, this may change in the future. As is well known in the art, use of interleave protects against short duration noise spikes by interleaving units (e.g. bytes) of a certain number (depending on the depth of interleave) of code words (each comprising several units) where each code word has a certain amount of error protection such that a relatively small number of errored units per code word can be recovered by the error protection mechanism to recover the original code word completely (e.g. if there are 5 units (e.g. bytes) per code word and the error correction mechanism can recover code words where one unit is errored, an interleave depth of 2 would enable both interleaved words to both be recovered if a noise caused two adjacent units within a two word transmission period to become corrupted). Interleaving provides protection against impulsive noises at the expense of increased latency (and greater buffering requirements of network equipment).

The central management function which ultimately receives the line data uses the data which it receives to perform Dynamic Line Management (DLM) which basically involves deciding the most suitable profile to use for the line in question. It also ensures that the BRAS controlling the rate at which data can flow to the line is appropriately configured (to avoid excessive data from reaching the DSL line at a rate which the DSL line cannot support. The central management function may be performed by a single large computer or may be distributed over a large number of computers, etc.

However, even in cases where a profile has been accurately determined, the quality of an ADSL connection can fluctuate due to the presence of noise.

### Summary of the Invention

According to a first aspect of the present invention, there is provided a method according to claim 1.

According to a further aspect of the present invention there is provided an aggregation device according to claim 4.

In order that the present invention may be better understood, embodiments thereof will now be described, by way of example only, with reference to the accompanying drawings in which:
Figure 1 is a schematic block diagram illustrating a telecommunications network incorporating a plurality of DSLAMs according to a first aspect of the present invention;
Figure 2 is a schematic block diagram illustrating an alternative telecommunications network similar to that of Figure 1, but further including a plurality of element manager devices which interface between a subset of the DSLAMs and a management device which ultimately receives messages from the DSLAMs;
Figure 3 is a schematic block diagram illustrating one of the DSLAMs of Figure 1 in more detail; and
Figure 4 is a flow diagram illustrating the steps carried out by the DSLAM of Figure 3 to force re-synchronisation of a line.

### Description of a Preferred Embodiment

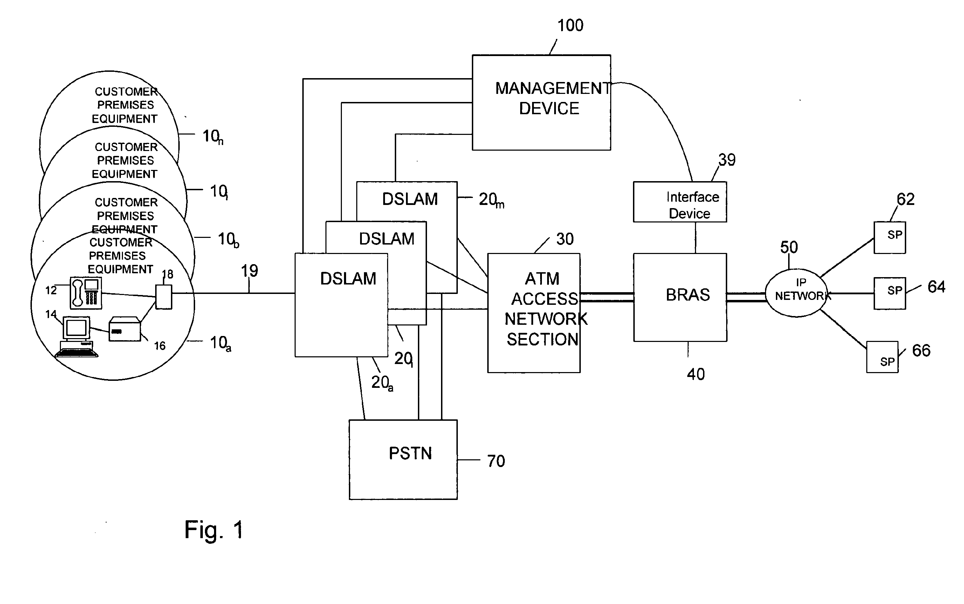

Referring to Figure 1, a first embodiment of the present invention is illustrated in overview. Copper pair loops 19 connect a number of sets of customer premises equipment 10_{a,} 10_{b} ... 10ᵢ ... 10ₙ to a smaller number of DSLAMs 20ₐ ... 20ᵢ ... 20ₗ. Each DSLAM is typically located within a local exchange (also known as a central office in the US) each of which may house one or more DSLAMs. Each DSLAM 20 separates normal voice traffic and data traffic and sends the voice traffic to the Public Switched Telephone Network (PSTN) 70. The data traffic is passed on through an core Access Network section 30 (which will typically be an ATM network section as is assumed in this embodiment) to a Broadband Remote Access Server (BRAS) 40 at which several IP traffic flows from (and to) multiple Service Providers (SP's) 62, 64, 66 are aggregated (and disaggregated) via an IP network 50 (which may, of course, itself be provided on top of an ATM network). Note that although only a single BRAS is shown, in practice a large access network will include a large number of BRAS's. Within each set of customer premises equipment 10, there is typically an ADSL splitter filter 18, a telephone 12, an ADSL modem 16 and a computer 14.

In an alternative embodiment, the DSLAM's could be replaced with mini-DSLAM's located in cabinets in an FTTC architecture, with optical backhaul connections between the mini-DSLAM's and an access node such as an MSAN located In the local exchange. In such a case, both voice traffic and data traffic would be sent via the same backhaul connection and then voice traffic could be separated onto the PSTN by the access node at the exchange. Alternatively, in a full IP voice network, the voice and data would all be carried together as data throughout the network, etc.

In addition to the above mentioned items, in the present embodiment, there is also a management device 100 which communicates between the DSLAMs 20 and the BRAS (or BRAS's) 40. In the present embodiment, the management device communicates with individual BRAS's via one or more further interface devices 39 each of which communicates directly with one or more BRAS's in order to set user profiles, etc. A detailed understanding of the operation of the management device, the interface device(s) and the BRAS(s) is not required in order to understand the present invention, however, for completeness an overview of their operation is set out below. For a more detailed discussion, the reader is referred to co-pending European patent application No. 05254769.2 the contents of which are incorporated herein by reference. Thus, in overview, the management device 100 obtains information from each DSLAM 20 about the rate at which each Digital Subscriber Line (DSL) connects to the DSLAM (as is discussed in greater detail below, in the present embodiment this is done by each DSLAM generating and transmitting to the management device 100 a message indicating the new line rate each time a line connects up at a speed which differs from the speed at which the line last connected up - or synchronised as this process is commonly termed).

In the present embodiment, the management device then processes this information to assess a consistent connection speed achieved by each such DSL. If it determines that this consistent rate has increased as a result of recent higher rate connections, it instructs the BRAS to allow higher through flows of traffic for that DSL. On the other hand, if it detects that a particular connection speed is below the stored consistent value, it reduces the consistent value to the current connection rate and immediately informs the BRAS of the new consistent value rate so that the BRAS does not allow more traffic to flow to the DSL than the DSL is currently able to cope with.

The exact algorithm used by the management device to calculate the consistent rate in the present embodiment is not pertinent to the present invention and therefore is not described. However, it should be noted that the intention of the algorithm is to arrange that the user will receive data at the highest rate which his/her DSL is consistently able to obtain without requiring the BRAS to be reconfigured every time the DSL is connected. At the same time the algorithm seeks to ensure that if the DSL connects at a rate which is below that at which the BRAS is currently configured to allow data through, then the BRAS is quickly reconfigured to avoid overloading the DSLAM. The reason for wanting to avoid having to contact the BRAS each time a DSL connects to the DSLAM is because with current systems it is not generally possible to reconfigure the BRAS without a significant delay (e.g. of a few minutes). Furthermore, there is a limit to the rate at which a BRAS can process reconfiguration requests. These restrictions are sometimes referred to by saying that the BRAS needs to be provisioned, and drawing a distinction between systems which are switched (e.g. ATM Switched Virtual Circuits) and systems which are provisioned. Current systems allow for quite quick provisioning (often a matter of minutes rather than days or weeks) but there is still a significant difference between such quick provisioning and real-time switching.

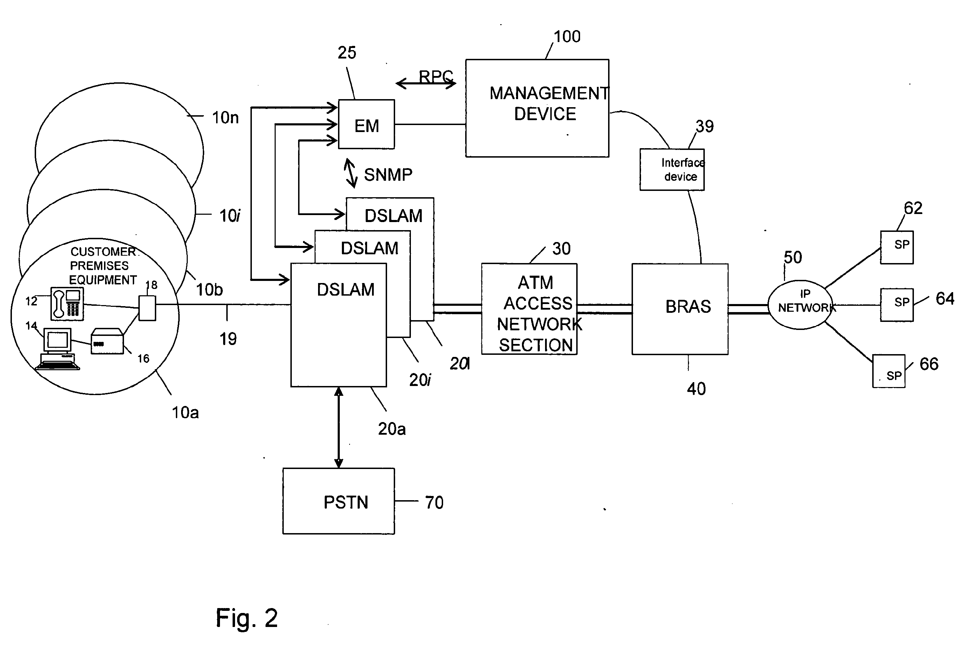

Figure 2 shows an alternative embodiment to that of Figure 1 which is very similar and common reference numerals have been used to describe common elements. The main difference is simply that in Figure 2, instead of the DSLAMs communicating notification messages directly to the management device 100, an element manager device 25 (which connects to a plurality of DSLAMs) acts as an interface between the DSLAMs and the management device. Note that in a large access network, there may be many DSLAMs and several element managers, each of which may connect to a sub-set of the DSLAMs. Furthermore, additional levels of hierarchy could be imposed where a number of element managers communicate with an element manager which then interfaces to the management device, etc.

The embodiment of Figure 2 can be operated in at least two slightly different ways in order to generate and transmit notifications to the management device 100. Firstly, each DSLAM can perform monitoring and determine whenever a condition or set of conditions has arisen which requires a notification to be passed to the management device 100 in which case the DSLAM can generate the notification and send it to the element manager 25 (using, for example the well known SNMP protocol as illustrated in Figure 2) whereupon the element manager 25 then simply forwards on the notification message to the management device (e.g. using a Remote Procedure Call (a well known Java based protocol) as illustrated in Figure 2). Alternatively, each DSLAM can simply forward on a notification to the element manager each time a DSL synchronises (again for example using SNMP) and the element manager can process this information to determine if a notifiable event has occurred (e.g. such as the synchronisation line rate for a particular line having changed). Then if the element manager determines that such an event has occurred, it can generate and transmit (again using, for example an RPC) a suitable notification message to the management device 100. In this latter method of operation, a group of DSLAMs and their corresponding element manager form an access sub-system within the meaning of the term as used in the appended claims.

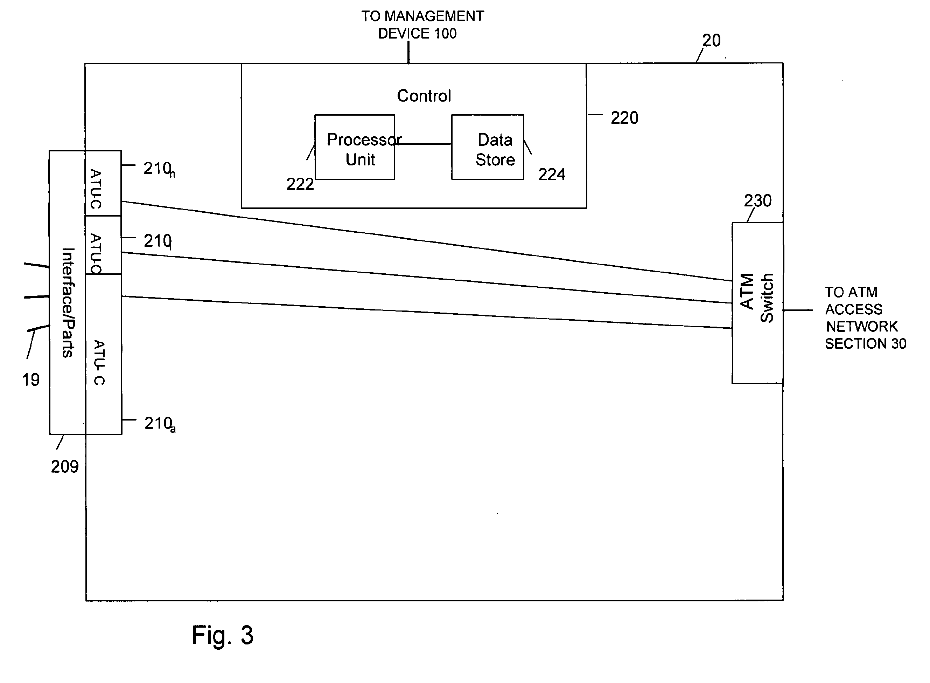

Referring now to Figure 3, this shows a DSLAM of Figure 1 (or Figure 2) in slightly more detail. Each incoming DSL line terminated by the DSLAM enters the DSLAM at one of a plurality of input ports in an interface module 209, which connects these to a plurality of modems, in this case a plurality of ADSL Terminating Units - Central office side (ATU-C's) 210a-n. The ATU-C's are connected to an ATM switch for forwarding on the data (in the form of ATM cells in the present embodiment) to an ATM switch 230 which switches the resulting cells onto the ATM section 30 of the access network. Within the DSLAM, there is a control unit 220 which includes a processor unit 222 and a data store 224. The control unit 220 performs various control functions including ensuring that each time a connection is made over a particular DSL that it complies with a stored profile for that line. As is well known within the field of xDSL, each line is set up according to a DSL profile which specifies various parameters necessary for establishing an xDSL connection.

As mentioned above, when a line is not stable due to an incorrect profile, a new profile is selected to better suit the new line characteristics and applied the next time the ADSL connection is attempted.

If on the other hand a profile is chosen so that the line is stable, then the assignment of a new profile is handled a lot more conservatively.

This means that even if the line is capable of handling a faster connection, the profile will not be updated for some time. Furthermore even if the profile is updated, the new profile cannot take effect until the connection is re-trained.

Therefore any noise present at the time a connection is made will cause the connection speed to be lower than the maximum rate allowed by the profile. In this embodiment, the DSLAMS monitor the noise present on the line and if this noise is no longer present after the connection is established, the DSLAM initiates a retraining of the line which should allow a greater connection speed within the bounds of the applied profile.

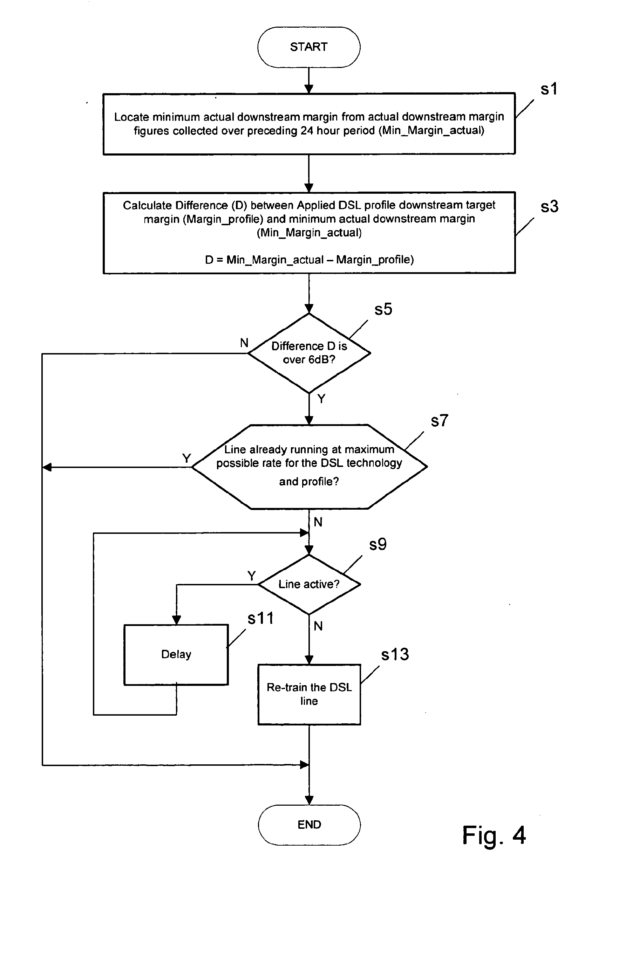

The processing of the DSLAM for each connected DSL line will be described with reference to Figure 4.

In step s1, the DSLAM 20 processes historical performance data for actual downstream margin figures collected over a preceding 24 hour period to determine a minimum actual downstream margin.

In step s3, the DLSAM 20 calculates whether there is a difference between the minimum actual downstream target margin and the target downstream SNR as specified by the currently applied DSL profile.

In step s5 the calculated difference is compared against a threshold. In this embodiment, the threshold value is 6dB. If the difference is less than 6dB, then processing ends.

However, if the difference is over 6dB, then this is indicative of an improvement in line conditions since the line was last trained due to the removal of noise conditions or lines that suffered a fault have been fixed. In step s7 a check is made to determine whether the line is already running at the maximum possible speed for the chosen DSL technology and the currently applied profile. If the line is already running at the maximum possible speed, then processing ends.

If the line is not, then the line could benefit from retraining. Although a speed increase is possible, a higher priority is to ensure that the user does not suffer any disruption to their service so in step s9, the DSLAM 20 checks to see if the line is active by polling the traffic counters. If there is activity, then processing proceeds to step s11 to wait for a predetermined or random period of time before re-checking for user activity. If the line is not being used, then in step s13 the line is retrained so that higher speed can be achieved.

### Alternatives

In the embodiment, the monitoring and retraining of lines is determined at each DSLAM. In an alternative, the DLM function 110 of the Management device 100 could perform the method.

## Claims

1. A method of operating an access network including a plurality of data connections between end user devices and an aggregation transceiver device where the connections are aggregated for onward connection through the access network, the method comprising for each data connection:
monitoring a characteristic of the data connection;
comparing the monitored characteristic value against a target characteristic value defined in a profile applied to the data connection; and
if the monitored value is higher than the target value, re-establishing the data connection.

2. A method according to claim 1, wherein the characteristic is a Signal-to-Noise value.

3. A method according to claim 1 or 2, further comprising checking for activity in the data connection before re-establishing the data connection.

4. An aggregation device operating within an access network and including a plurality of digital subscriber line modems for terminating a plurality of corresponding digital subscriber lines and aggregating them for onward connection through the access network, the access device comprising:
means for monitoring a characteristic of data connections established over each digital subscriber line;
means for comparing each monitored characteristic value against a corresponding target characteristic value defined in a profile applied to the respective data connection; and
means for re-establishing the data connection if the monitored value is higher than the target value.

5. A method according to claim 4, wherein the characteristic is a Signal-to-Noise value.

6. A method according to claim 4 or 5, further comprising means for determining whether the data connection is active before re-establishing the data connection.
